# EUROPÄISCHE PATENTSCHRIFT

(11) **EP 2 793 543 B1**
(45) Veröffentlichungstag und Bekanntmachung des Hinweises auf die Patenterteilung: **16.09.2015**
(21) Anmeldenummer: 12798668.5
(22) Anmeldetag: 29.11.2012
(51) Int. Cl.: A01C 5/06

(54) **SÄSCHAR**
SEED DRILL COULTER
SOC SEMEUR

(30) Priorität: 22.12.2011 DE 102011056860
(43) Veröffentlichungstag der Anmeldung: 29.10.2014
(73) Patentinhaber: Amazonen-Werke H. Dreyer GmbH & Co. KG, 49205 Hasbergen (DE)
(72) Erfinder: SCHWAMM, Viktor, 49086 Osnabrück (DE)
(86) Internationale Anmeldenummer: PCT/EP2012/073955
(87) Internationale Veröffentlichungsnummer: WO 2013/092161

(56) Entgegenhaltungen:
- DE-A1- 3 223 376
- DE-A1- 3 618 202
- US-A1- 2009 308 296

## Beschreibung

Die Erfindung betrifft ein Säschar gemäß des Oberbegriffes des Patentanspruches 1.

Ein derartiges Säschar ist in der DE 32 23 376 A1 beschrieben. Dieses Säschar ist als Meißelschar ausgebildet und weist im vorderen Bereich der Aufreißspitze eine Panzerung auf. Diese Panzerung beschränkt sich jeweils auf den vorderen aufrechten und vorderen unteren Bereich der Aufreißspitze. Mittels dieser Panzerung im vorderen Bereich der Aufreißspitze wird der Verschleiß erheblich reduziert und somit die Standzeit der Aufreißspitze des Säschare erhöht.

Der Erfindung liegt die Aufgabe zu Grunde, für extreme Einsatzstelle eine weitere Erhöhung der Standzeit des Meißelschares zu erreichen.

Diese Aufgabe wird erfindungsgemäß dadurch gelöst, dass die auf der Unterseite der Aufreißspitze angeordnete Panzerung zumindest im hinteren Bereich der Unterseite der Aufreißspitze angeordnet ist.

Infolge dieser Maßnahme wird unter extremen Einsatzbedingungen auch die Unterseite der Aufreißspitze vor einem zu großen Verschleiß in einfacher Weise geschützt. Die Standzeit der Scharspitze wird erheblich erhöht.

Um einen ausreichend hohen Verschleißschutz auch unter extremen Bedingungen zu erreichen, ist vorgesehen, dass die Panzerung sich auf der Unterseite der Aufreißspitze über mehr als die halbe Länge der Unterseite der Aufreißspitze erstreckt.

Eine einfache Ausgestaltung der Panzerung lässt sich dadurch erreichen, dass die jeweilige Panzerung als Hartmetall-Platte ausgebildet ist. Hierbei hat sich gezeigt, dass die Ausgestaltung der jeweiligen Panzerung als Wolfram-Carbid-Platte besonders vorteilhaft ist.

Weitere Einzelheiten der Erfindung sind der Bespielsbeschreibung zu entnehmen. Die Zeichnungen zeigen
- Fig. 1: ein Säschar in Seitenansicht und in Prinzip Darstellung,
- Fig. 2: das Säschar in Vorderansicht,
- Fig. 3: das Säschar in Draufsicht,

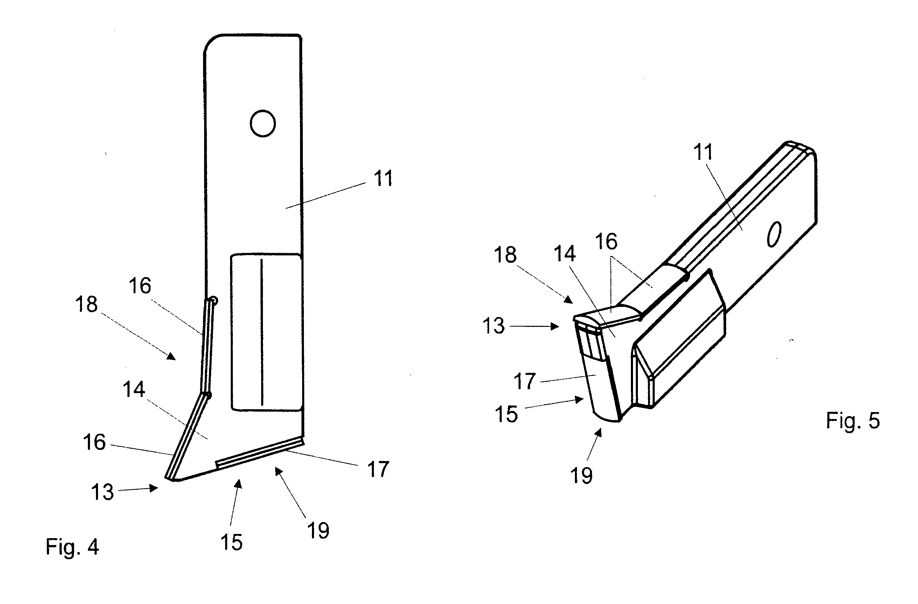

- Fig. 4: einen Meißel des Meißelschares in Seitenansicht und
- Fig. 5: einen Meißel des Meißelschares in perspektivischer Darstellung.

Die nicht dargestellte Sämaschine zum Einsatz zur Direktsaat und zur Mulchsaat weist an einem Rahmen beabstandet zueinander angeordnete Meißelsäschare 1 mit den zugeordneten Rollen 2 auf. Die Meißelsäschare 1 werden von den Rollen 2 in ihrer Eindringtiefe in den Boden führen. Über eine nicht dargestellte pneumatische Förder- und Dosiereinrichtung wird das sich in einem nicht dargestellten Vorratsbehälter befindliche Saatgut den Säscharen 1 über nicht dargestellte Saatleitungen zugeführt.

Die Meißelsäschare 1 sind über als Parallelogrammhalterungen 3 ausgebildete Halterungen an den Tragelementen 4 angeordnet. Im Ausführungsbeispiel weist das Meißelsäschar 1 eine auf Griff stehende Spitze 5 auf. Es ist jedoch auch möglich, dass der vordere untere Bereich des Meißelsäschares 1 derart geneigt nach hinten unten verläuft, dass die Scharspitze gegenüber den übrigen vorderen Bereichen nacheilend ist. Die Fahrt- und Arbeitsrichtung ist durch den Pfeil 6 gekenzeichnet.

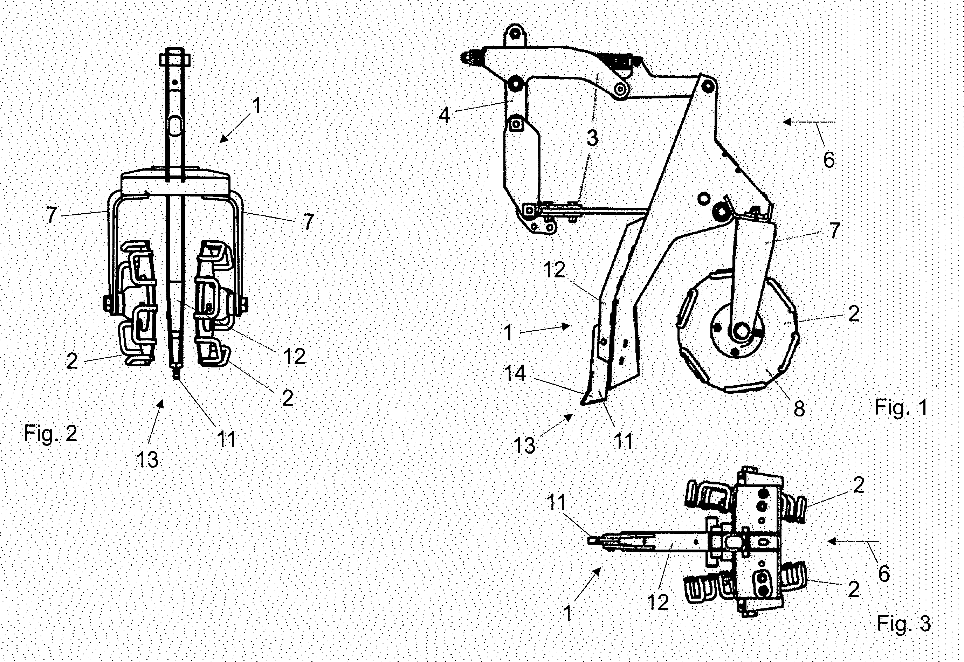

Jedem Meißelsäschar 1 sind zwei Tiefenführungsrollen 2 zugeordnet, die in Draufsicht gesehen wie die Fig. 3 zeigt, entgegengesetzt schräg und zu einem sich in Fahrtrichtung 6 öffnenden V angestellt sind, angeordnet. Die beiden Rollen 2 sind mittels einer Halterung 7 an dem Schar 1 befestigt. Die einem Säschar 1 zugeordneten Rollen 2 sind in einem derartigen Abstand zueinander angeordnet, dass sie auf der in Fahrtrichtung 6 hinteren Seite einen Abstand aufweisen, der zumindest etwa der Breite des Säschare 1 entspricht. Die Rollen 2 weisen eine scheibenförmige Halterungsscheibe 8 auf, die als Ringscheibe ausgebildet ist. An dem freien äußeren umlaufenden Randbereich 9 der scheibenartigen und ebenen flachen Halterungsscheibe 8 sind in radialer Richtung abstehende Stütz- oder Druckstäbe 10 angeordnet. Die Stütz-und Druckstäbe 10 sind U- oder ringförmig ausgestaltet. Der die beiden Stege der U-förmigen oder ringförmig ausgebildeten Stütz- oder Druckelemente verbindenden Steg ist auf der dem Befestigungsbereich der Stütz- oder Druckelemente 10 abgewandten Seite angeordnet. Die stabförmigen Druckelemente 10 sind jeweils in dem äußeren radialen Bereich 9 der Ringscheibe 8 beabstandet zueinander angeordnet und weisen zumindest annähernd in axialer Richtung. Die Stütz- und Druckelemente 10 weisen einen runden Querschnitt auf. Der Abstand der Stütz- und Druckelemente 10 zueinander liegt zwischen 60 und 75mm. Der Abstand der parallelen Stege der U-und/oder ringförmigen Stützelemente liegt ebenfalls zwischen 60 und 75mm. Die Stege weisen eine Länge zwischen 50 und 75mm auf. Der äußere Aufstandsbereich der Stütz- und/oder Druckelemente sind mit einem Winkel zwischen 65° und 90°, vorzugsweise etwa 70° zur Halterungsscheibenebene angeordnet.

Das Meißeßelsäschar 1 weist auf der der Fahrtrichtung 6 zugewandten Seite des Säschares 1 einen Scharmeißel 11, der am Scharkörper 12 des Meißelschares 1 befestigt ist, auf. Der Scharmeißel 11 ist als Aufreißkörper zum Aufreißen des Bodens ausgebildet. Im unteren Bereich 13 des Scharmeißels 11 ist eine Aufreißspitze 14 angeordnet ist, die zumindest ebenso schmal wie der Aufreißkörper 11 selbst ist. Die untere Seite 15 der Aufpreißspitze 14 verläuft nach hinten-oben. Die Aufreißspitze 14 weist eine Panzerung 16 und 17 aufweist, die im vorderen der Fahrtrichtung 6 zugewandten unteren aufrechten Bereich 18 und auf der Unterseite 15 der Aufreißspitze 11 angeordnet.

Die auf der Unterseite 15 der Aufreißspitze 11 angeordnete Panzerung 17 ist zumindest im hinteren Bereich 19 der Unterseite 15 der Aufreißspitze 11 angeordnet ist.

Die Panzerung 17 erstreckt sich auf der Unterseite 15 der Aufreißspitze 11 über mehr als die halbe Länge der Unterseite 15 der Aufreißspitze 11.

Die jeweilige Panzerung 16 und 17 ist als Hartmetall-Platte, vorzugweise als Wolfram-Carbid-Platte ausgebildet.

## Patentansprüche

1. Säschar (1) für das Direktsäverfahren mit einem auf der der Fahrtrichtung zugewandten Seite des Säschares (1) angeordneten Aufreißkörper (11) zum Aufreißen des Bodens, wobei im unteren Bereich des Aufreißkörpers (11) eine Aufreißspitze (14) angeordnet ist, die zumindest ebenso schmal wie der Aufreißkörper (11) selbst ist, wobei die untere Seite (15) der Aufreißpitze (14) nach hinten-oben verläuft, wobei die Aufreißspitze (14) eine Panzerung (17) aufweist, die im vorderen der Fahrtrichtung zugewandten unteren aufrechten Bereich und auf der Unterseite der Aufreißspitze (14) angeordnet ist, **dadurch gekennzeichnet, dass** die auf der Unterseite (15) der Aufreißspitze (14) angeordnete Panzerung (17) zumindest im hinteren Bereich (19) der Unterseite (15) der Aufreißspitze (14) angeordnet ist.

2. Säschar nach Anspruch 1, **dadurch gekennzeichnet, dass** die Panzerung (17) sich auf der Unterseite (15) der Aufreißspitze (11) über mehr als die halbe Länge der Unterseite (15) der Aufreißspitze (14) erstreckt.

3. Säschar nach Anspruch 1, **dadurch gekennzeichnet, dass** die jeweilige Panzerung (17) als Hartmetall-Platte ausgebildet ist.

4. Säschar nach Anspruch 1, **dadurch gekennzeichnet, dass** die jeweilige Panzerung (17) als Wolfram-Carbid-Platte ausgebildet ist.

## Claims

1. Seed drill coulter (1) for the direct sowing method, with a tearing body (11), which is arranged on that side of the seed drill coulter (1) which faces the direction of travel, for tearing the ground, wherein a tearing point (14) which is at least just as narrow as the tearing body (11) itself is arranged in the lower region of the tearing body (11), wherein the lower side (15) of the tearing point (14) runs rearwards and upwards, wherein the tearing point (14) has armour-plating (17) which is arranged in the front, lower, upright region facing the direction of travel and on the lower side of the tearing point (14), **characterized in that** the armour-plating (17) arranged on the lower side (15) of the tearing point (14) is arranged at least in the rear region (19) of the lower side (15) of the tearing point (14).

2. Seed drill coulter according to Claim 1, **characterized in that** the armour-plating (17) extends on the lower side (15) of the tearing point (14) over more than half the length of the lower side (15) of the tearing point (14).

3. Seed drill coulter according to Claim 1, **characterized in that** the respective armour-plating (17) is designed as a cemented-carbide tip.

4. Seed drill coulter according to Claim 1, **characterized in that** the respective armour-plating (17) is designed as a tungsten-carbide tip.

## Revendications

1. Soc semeur (1) pour un procédé de semage direct avec un corps de déchirage (11) disposé du côté du soc semeur (1) tourné vers la direction de conduite pour déchirer le sol, une pointe de déchirage (14) étant disposée dans la région inférieure du corps de déchirage (11), laquelle est elle-même au moins aussi étroite que le corps de déchirage (11), le côté inférieur (15) de la pointe de déchirage (14) s'étendant vers l'arrière et vers le haut, la pointe de déchirage (14) présentant un blindage (17) qui est disposé dans la région droite inférieure avant tournée vers la direction de conduite et sur le côté inférieur de la pointe de déchirage (14), **caractérisé en ce que** le blindage (17) disposé sur le côté inférieur (15) de la pointe de déchirage (14) est disposé au moins dans la région arrière (19) du côté inférieur (15) de la pointe de déchirage (14).

2. Soc semeur selon la revendication 1, **caractérisé en ce que** le blindage (17) s'étend sur le côté inférieur (15) de la pointe de déchirage (14) sur plus de la moitié de la longueur du côté inférieur (15) de la pointe de déchirage (14).

3. Soc semeur selon la revendication 1, **caractérisé en ce que** le blindage respectif (17) est réalisé sous forme de plaque en métal dur.

4. Soc semeur selon la revendication 1, **caractérisé en ce que** le blindage respectif (17) est réalisé sous forme de plaque en carbure de tungstène.
